**Europäisches Patentamt**

**European Patent Office**

**Office européen des brevets**

(19)

(11) Veröffentlichungsnummer : **0 437 437 B1**

(12) ## EUROPÄISCHE PATENTSCHRIFT

(45) Veröffentlichungstag der Patentschrift :
26.08.92 Patentblatt 92/35

(51) Int. Cl.$^5$ : **G01L 3/14**

(21) Anmeldenummer : **89907079.1**

(22) Anmeldetag : **24.06.89**

(86) Internationale Anmeldenummer :
**PCT/DE89/00423**

(87) Internationale Veröffentlichungsnummer :
**WO 90/02931 22.03.90 Gazette 90/07**

(54) **MESSEINRICHTUNG ZUR BESTIMMUNG DES DREHMOMENTS EINES ROTIERENDEN MASCHINENTEILS.**

(30) Priorität : **09.09.88 DE 3830735**

(43) Veröffentlichungstag der Anmeldung :
**24.07.91 Patentblatt 91/30**

(45) Bekanntmachung des Hinweises auf die
Patenterteilung :
**26.08.92 Patentblatt 92/35**

(84) Benannte Vertragsstaaten :
**CH DE FR GB IT LI SE**

(56) Entgegenhaltungen :
**EP-A- 0 151 089**
**GB-A- 2 065 897**
**US-A- 4 592 241**

(73) Patentinhaber : **ROBERT BOSCH GMBH**
**Postfach 30 02 20**
**W-7000 Stuttgart 30 (DE)**

(72) Erfinder : **DOBLER, Klaus**
**Bettäckerstr. 12**
**W-7016 Gerlingen (DE)**
Erfinder : **HACHTEL, Hansjörg**
**Buchenstr. 4**
**W-7251 Weissach (DE)**

**EP 0 437 437 B1**

## Beschreibung

Die Erfindung geht aus von einer Meßeinrichtung nach der Gattung des Hauptanspruchs. Eine derartige bekannte Meßeinrichtung hat zwei zu einer Welle koaxial angeordnete Körper aus elektrisch leitendem, nicht magnetischem Werkstoff, die beide drehfest mit der Welle verbunden und gegeneinander verdrehbar sind. Weiterhin ist eine zur Welle koaxiale Spule vorgesehen, die von hochfrequentem Wechselstrom durchflossen und in unmittelbarer Nähe der beiden Körper angeordnet ist. Diese weisen Ausschnitte auf, deren gemeinsame Überdekkungsfläche mit zunehmendem, zwischen den Körpern auftretenden Verdrehwinkel sich ändert, wobei zur Messung der Impedanzänderung der Spule, die durch in den Körpern induzierte Wirbelströme entsteht, die Relativverdrehung der beiden Körper erfaßbar ist. Zur Erzeugung dieser Relativverdrehung ist in axialer Richtung der Welle ein Torsionsstab angeordnet, wodurch die Meßeinrichtung relativ lang baut (US-PS 4 356 732).

### Vorteile der Erfindung

Die erfindungsgemäße Meßeinrichtung mit den kennzeichnenden Merkmalen des Hauptanspruchs hat demgegenüber den Vorteil, daß sie relativ kurz baut und bei beengten Einbauverhältnissen verwendet werden kann. Durch die hülsenförmigen Meßelemente mit in Achsrichtung der Welle ausgebildeten Längsschlitzen und die äußere und innere Spulenanordnung auf derselben axialen Höhe werden axiale Abstandsänderungen zwischen den Meßspulen und den Meßhülsen kompensiert. Bei relativ einfachem Aufbau und kompakter Bauweise ist eine genaue Erfassung des antreibenden bzw. abtreibenden Moments (Drehmoments) möglich.

Durch die in den Unteransprüchen aufgeführten Maßnahmen sind vorteilhafte Weiterbildungen und Verbesserungen der im Hauptanspruch angegebenen Merkmale möglich.

### Zeichnung

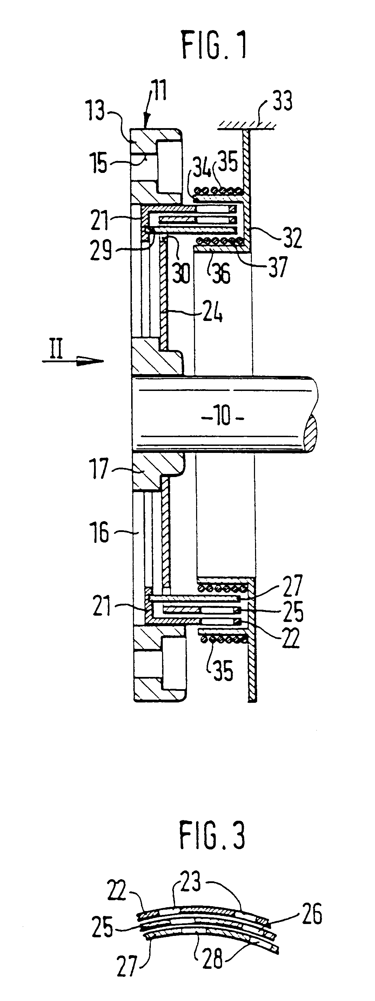

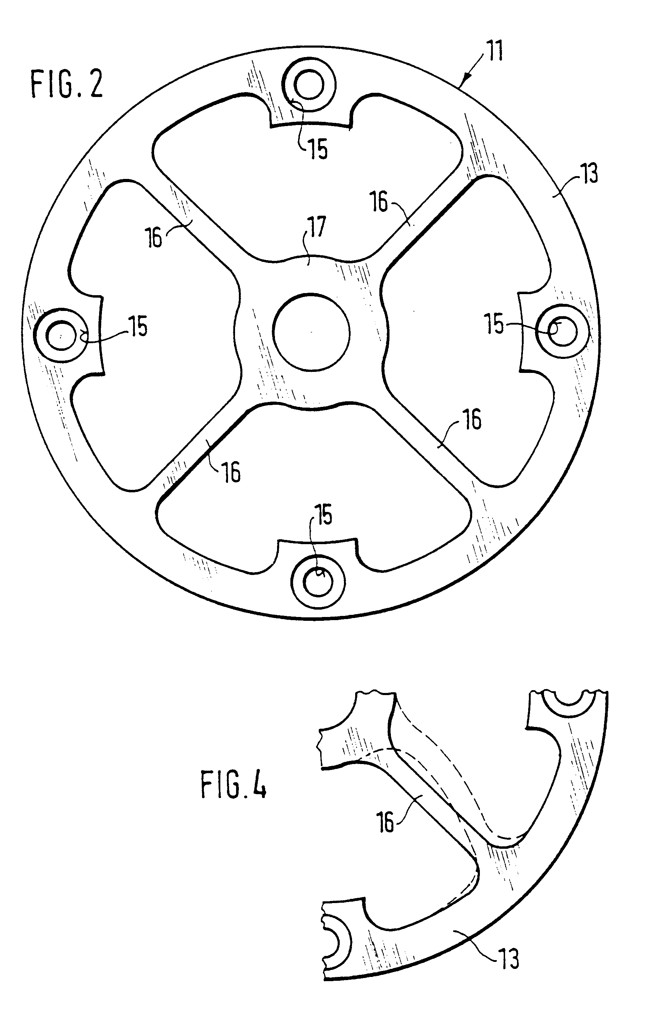

Ein Ausführungsbeispiel der Erfindung ist in der Zeichnung dargestellt und in der nachfolgenden Beschreibung näher erläutert. Es zeigen Figur 1 einen Längsschnitt durch einen Drehmomentsensor, Figur 2 einen Schnitt in Richtung II-II der Figur 1, Figur 3 eine Einzelheit und Figur 4 eine Darstellung des Torsionselements in Grundstellung und im tordierten Zustand.

### Beschreibung des Ausführungsbeispiels

In Figur 1 ist mit 10 eine Welle bezeichnet, die an einem Ende einen als Speichenrad 11 ausgebildeten Flansch aufweist. Er hat einen äußeren Kranz 13, in dem im Abstand von ca. 90° mehrere durchgehende Bohrungen 15 ausgebildet sind, über die z.B. ein nicht dargestellter Elektromotor angeflanscht werden kann. Dadurch kann auf den Kranz 13 ein Antriebsdrehmoment eingeleitet werden. Die Speichen 16 des Speichenrads 11 sind fest mit der Nabe 17 und dem Kranz 13 verbunden und dienen als Biegestäbe.

Möglichst weit im Bereich der Kranzes 13 ist an der Speiche 16 oder am Kranz 13 selbst mit Hilfe einer Lasche 21 eine Hülse 22 befestigt, die in Längsrichtung der Hülse 2Z ausgebildete Längsschlitze 23 aufweist. Ferner ist an der Nabe 17 mit Hilfe eines Trägers 24 eine zweite Hülse 25 mit in Achsrichtung der Hülse ausgebildeten Längsschlitzen 26 angeordnet. Innerhalb der Hülse 25 befindet sich eine dritte Hülse 27, die ebenfalls in Achsrichtung der Hülse 27 ausgebildete Längsschlitze 28 aufweist. Die Hülse 27 hat an den der Speichen 16 zugewandten Seite Verlängerungen 29, mit denen die Hülse 27 durch im Träger 24 ausgebildete Öffnungen 30 ragt und an der Lasche 21 befestigt ist. Die Längsschlitze 23, 26, 28 der drei Hülsen 22, 25, 27 sind so angeordnet, daß in Ausgangsstellung die Längsschlitze 23, 26 der beiden Hülsen 22, 25 und die Längsschlitze 26, 28 der Hülsen 25, 27 sich jeweils halb überlappen. Dadurch wird bei der Relativbewegung der Hülsen 22 und 27 gegen die Hülse 25 erreicht, daß sich die Längsschlitze 23 und 26 öffnen, während sich die Längsschlitze 26, 28 schließen und umgekehrt.

Um die drei Hülsen herum ist ein im Querschnitt F-förmiger Spulenkörper 32 angeordnet, der an einem Gehäuse 33 befestigt ist. Auf der Außenwand des Hülsenteils 34 des Spulenkörpers 32 ist eine erste Spule 35 aufgewickelt. Auf dem zweiten Hülsenteil 36 des Spulenkörpers 32 ist eine zweite Spule 37 befestigt. Die Hülsen 22, 25, 27 werden zwischen den beiden Hülsenteilen 34, 36 bewegt.

Wird auf das Speichenrad 11 ein Drehmoment M1, z.B. ein Antriebsdrehmoment eingeleitet, so kann über die Welle 10 ein Drehmoment M2, ein sogenanntes Abtriebsmoment abgegriffen werden, wodurch die als Biegestäbe dienenden Speichen 16 geringfügig durchgebogen werden. In Figur 4 ist hierzu in ausgezogenen Linien das Speichenrad 11 mit den Speichen 16 in Grundstellung, d.h. mit nicht gebogenen Speichen 16 dargestellt. Mit gestrichelten Linien ist das Speichenrad 11 mit gebogenen Speichen 16 eingezeichnet. Da die

2

Hülsen 22 und 27 starr mit dem Kranz 13 und die Hülse 25 starr mit der Nabe 17 verbunden sind, wird eine Verdrehung der beiden Hülsen 22 und 27 gegen die Hülse 25 um einen bestimmten Winkel $\alpha_1$ bewirkt.

Die Meßeinrichtung arbeitet nach dem induktiven oder nach dem Wirbelstrommeßprinzip. Beim Wirbelstrommeßprinzip werden die Spulen 35, 37 von einem hochfrequenten Wechselstrom durchflossen. Zur Messung wird proportional zu dem übertragenen Drehmoment die Hülse 25 sowohl relativ gegenüber der Hülse 22 als auch gegenüber der Hülse 27 verdreht. An den beiden Spulen 35, 37 entsteht ein magnetisches Wechselfeld, das auf den metallischen Oberflächen der drei Hülsen 22, 25, 27 Wirbelströme bewirkt. Je größer dabei die vom magnetischen Wechselfeld durchsetzte Fläche der Hülsen ist, desto mehr Wirbelströme werden erzeugt. Ferner ist die Größe der erzeugten Wirbelströme abhängig vom verwendeten Material der Hülsen, insbesondere deren Oberfläche, sowie vom Abstand der Hülsen 22, 25, 27 zueinander und zu den Spulen 35, 37. Durch die erzeugten Wirbelströme wird der Spulen-Wechselstromwiderstand verringert, was eine Verkleinerung der an den Spulen anliegenden Spannungen bewirkt bzw. umgekehrt bei einer Erhöhung des Spulenwechselstromwiderstands eine Erhöhung der anliegenden Spannung verursacht. In Ausgangsstellung der Meßeinrichtung sind die Längsschlitze 23 und 26 halb überdeckt, und die Schlitze 26 und 28 ebenfalls halb überdeckt. Wird ein Drehmoment über die Meßeinrichtung übertragen, so werden durch die Wand der Hülse 25 die Längsschlitze 23 der Hülse 22 um denselben Betrag verschlossen, um den die Längsschlitze 28 der Hülse 27 von der Hülse 25 geöffnet werden. Dadurch wird jeweils die den Spulen 35, 37 zugeordnete Größe der Oberflächen der Hülsen, d.h. die Größe des Bereichs, auf dem sich die Wirbelströme ausbilden können, verändert, was eine gegensinnige Änderung der Impedanz der Spulen 35, 37 bewirkt. Die Spulen 35, 37 sind in einer Wheatstone'schen Halbbrückenschaltung verschaltet, so daß das an der Meßbrücke abgegriffene Meßsignal proportional zum übertragenen Drehmoment ist. Entscheidend ist, daß axiale Verschiebungen zwischen den Hülsen und den Spulen 35, 36 und Fehler durch Umwelteinflüsse wie z.B. Wärmedehnungen kompensiert werden, da sie in beiden Spulen das Signal in gleicher Richtung ändern. Die so gewonnenen Meßsignale werden einer Auswerteschaltung zugeführt, so daß ein angeschlossenes Maschinenteil gesteuert bzw. geregelt werden kann.

Besonders vorteilhaft ist eine Anwendung des Drehmomentsensors in direkter Kombination mit einem Elektromotor wie beispielsweise bei einer elektromotorischen Lenkhilfe für ein Fahrzeug. Die Welle 10 führt dann zum Lenkgetriebe. An dem Speichenrad 11 ist die Lenkwelle oder ein Servomotor befestigt. Bei Lenkhilfen ist eine besonders kompakte Bauweise notwendig, die durch die beschriebene Ausbildung mit Biegestäben in Form eines Speichenrades ermöglicht wird.

## Patentansprüche

1. Meßeinrichtung zur Bestimmung des Verdrehwinkels oder Drehmoments eines rotierenden Maschinenteils mit einem mindestens einen in radialer Richtung verlaufenden Biegestab (16) aufweisenden Torsionselement, das mit mehreren Meßelementen verbunden ist, dadurch gekennzeichnet, daß am Biegestab (16) ein erster (22) und ein zweiter (27) hülsenförmiger Körper mit in regelmäßigen Abständen ausgebildeten Schlitzen (23 bzw. 28) angeordnet sind, daß die Schlitze (23, 28) des ersten (22) und des zweiten Körpers (27) gegeneinander versetzt sind daß zwischen dem ersten (22) und zweiten Körper (27) ein dritter hülsenförmiger Körper (25) angeordnet ist, der am Fuß des Biegestabs (16) befestigt ist, so daß sich abhängig von der Biegung des Biegestabs (16) eine relative Verschiebung der Schlitze (23, 26, 28) des ersten und zweiten Körpers zu den Schlitzen (26) des dritten Körpers (25) ergibt, und daß dem ersten Körper (22) und dem dritten Körper (27) je mindestens eine Spule (35, 37) zugeordnet ist, die konzentrisch zueinander liegen und deren Impedanz in Abhängigkeit der relativen Stellung der Schlitze (23, 26, 28) verändert wird.

2. Meßeinrichtung nach Anspruch 1, dadurch gekennzeichnet, daß die hülsenförmigen Körper (22, 25, 27) in radialer Richtung angeordnet sind, und die Schlitze (23, 26, 28) in Längsrichtung der Körper ausgebildet sind.

3. Meßeinrichtung nach Anspruch 1 und/oder 2, dadurch gekennzeichnet, daß die Spulen (35, 37) in einer Wheatstone'schen Brückenschaltung verschaltet sind.

4. Meßeinrichtung nach einem der Ansprüche 1 bis 3, dadurch gekennzeichnet, daß das Torsionselement (11) ein Speichenrad ist, das mehrere mit dem Kranz (13) des Speichenrads verbundene Speichen (16) hat.

## Claims

1. Measuring device for determining the twisting angle or torque of a rotating machine part, having a torsion element which has at least one bending rod (16) running in the radial direction and is connected to a plurality of measuring elements, characterised in that a first (22) and a second (27) sleeve-shaped body having slots (23 and 28 respectively) constructed at regular intervals are arranged on the bending rod (16), in that the slots (23, 28) of the first (22) and of the second body (27) are offset with respect to one another, in that, arranged between the first (22) and the second body (27), is a third sleeve-shaped body (25) which is attached to the foot of the bending rod (16) such that a relative displacement of the slots (23, 26, 28) of the first and second body with respect to the slots (26) of the third body (25) is produced as a function of the bending of the bending rod (16), and in that the first body (22) and the third body (27) have allocated to them in each case at least one coil (35, 37), which lie concentrically with respect to one another and whose impedance is varied as a function of the relative position of the slots (23, 26, 28).

2. Measuring device according to Claim 1, characterised in that the sleeve-shaped bodies (22, 25, 27) are arranged in the radial direction and the slots (23, 26, 28) are constructed in the longitudinal direction of the bodies.

3. Measuring device according to Claim 1 and/or 2, characterised in that the coils (35, 37) are connected in a Wheatstone bridge circuit.

4. Measuring device according to one of Claims 1 to 3, characterised in that the torsion element (11) is a spoked wheel which has a plurality of spokes (16) connected to the rim (13) of the spoked wheel.

## Revendications

1) Dispositif de mesure du couple ou de l'angle de rotation d'une pièce ne machine en rotation avec un élément de torsion présentant au moins une barre de torsion (16) s'étendant radialement, qui est relié à plusieurs éléments de mesure, caractérisé en ce que sur la barre de torsion (16) sont disposés un premier corps (22) et un deuxième corps (27) en forme de douille, avec des fentes réalisées à intervalles réguliers (23 ou 28), que les fentes (23, 28) du premier corps (22) et du deuxième corps (27) sont décalées les unes par rapport aux autres, qu'entre le premier corps (22) et le deuxième corps (27) est disposé un troisième corps (25) en forme de douille, qui est fixé au pied de la barre de torsion (16), de sorte qu'en fonction de la flexion de la barre de torsion (16) il s'ensuit un décalage relatif des fentes (23, 26, 28) du premier et du deuxième corps vis-à-vis des fentes (26) du troisième corps (25), et qu'au premier corps (22) et au troisième corps (27) correspond respectivement une bobine (35, 37), qui sont concentriques l'une par rapport à l'autre et dont l'impédance varie en fonction de la position relative des fentes (23, 26, 28).

2) Dispositif de mesure selon la revendication 1, caractérisé en ce que les corps en forme de douille (22, 25, 27) sont disposés radialement et que les fentes (23, 26, 28) sont réalisées dans le sens longitudinal des corps.

3) Dispositif de mesure selon la revendication 1 et/ou 2, caractérisé en ce que les bobines (35, 37) sont branchées dans un pont de Wheatstone.

4) Dispositif de mesure selon l'une des revendications 1 à 3, caractérisé en ce que l'élément de torsion (11) est une roue à rayons, qui a plusieurs rayons (16) reliés à la couronne (13) avec la roue à rayons.

# FIG. 1

# FIG. 3

5

FIG. 2

FIG.4